# EUROPÄISCHE PATENTANMELDUNG

(11) **EP 1 093 071 A1**
(43) Veröffentlichungstag der Anmeldung: **18.04.2001**
(21) Anmeldenummer: 99120292.0
(22) Anmeldetag: 12.10.1999
(51) Int. Cl.: G06F 17/60

(54) **Verfahren zur Absicherung der Risiken von e-Commerce-Geschäften**

(71) Anmelder: Impact Business & Technology Consulting GmbH, 50668 Köln (DE)
(72) Erfinder: Noel, Jean-Marc, 51503 Rösrath (DE); Hafenbradl, Ulrich, 50937 Köln (DE)
(74) Vertreter: Wolff, Felix, Dr.

(57) **Zusammenfassung**

Die vorliegende Erfindung betrifft Telekommunikationsverfahren und Telekommunikationsvorrichtungen zur automatisierten Vergabe einer Versicherung zur Absicherung der Risiken bei e-Commerce-Geschäften.

## Beschreibung

Die vorliegende Erfindung betrifft Telekommunikationsverfahren und Telekommunikationsvorrichtungen zur automatisierten Vergabe einer Versicherung zur Absicherung der Risiken bei e-Commerce-Geschäften.

Das Volumen an Geschäften, insbesondere an Kaufgeschäften, sogenannten e-Commerce-Geschäften, die über World-Wide-Web-Dienste zwischen dem Käufer und dem Verkäufer abgeschlossen werden, nimmt dramatisch zu.

Bei diesen Geschäften sucht sich der Käufer auf der Homepage des Verkäufers Waren aus und bezahlt diese in der Regel indem er seine Kreditkartennummer angibt und der Betrag über das getätigte Kaufgeschäft von seinem Kreditkartenkonto abgebucht wird.

Während der Betrag über das getätigte e-Commerce-Geschäft dem Käufer in der Regel unmittelbar fällig gestellt wird, haben die gekauften Waren eine gewisse Lieferzeit, in der der Kunde im Unklaren darüber ist, ob er die gekaufte und auch bezahlte Ware erhalten wird. Auch bei einer Rückgabe erhaltener Waren tritt der Käufer in eine Vorleistung, bei der er bezüglich der Rückerstattung des Kaufpreises im Ungewissen ist.

Diese Unsicherheit hält derzeit immer noch viele Käufer von dem Abschluß von e-Commerce-Geschäften ab, insbesondere weil es relativ viele Verkäufer im World-Wide-Web (WWW) gibt, die kurz bevor sie Konkurs anmelden noch eine Vielzahl von Kaufgeschäften abschließen, die sie dann nicht mehr erfüllen.

Der vorliegenden Erfindung liegt deshalb die Aufgabe zugrunde ein Verfahren zur Verfügung zu stellen, mit dem die Risiken bei e-Commerce-Geschäften schnell und einfach abgesichert werden können.

Die Aufgabe wird erfindungsgemäß durch ein Verfahren zur automatisierten Vergabe einer Versicherung zur Absicherung der Risiken bei e-Commerce-Geschäften mittels Datenkommunikationsvorrichtungen, Telekommunikationsnetzen und Datenkonzentrationsvorrichtungen gelöst, wobei das Verfahren eine beliebige Wiederholung der folgenden Verfahrensschritte aufweist:
a) Übermittlung des Wunsches nach einer Versicherung, geschäftsrelevanter Daten und gegebenenfalls persönlicher Daten mittels einer Datenkommunikationsvorrichtung über ein Telekommunikationsnetz an eine Datenkonzentrationsvorrichtung,
b) Prüfung der in Schritt a) übermittelten geschäftsrelevanten und gegebenenfalls persönlichen Daten in der Datenkonzentrationsvorrichtung anhand der dort verfügbaren Daten und mindestens eines Prüfkriteriums, wobei im Falle der erfolgreichen Prüfung:
   bb1) die Zuordnung einer Versicherung in Form einer Versicherungsnummer zu dem jeweiligen Geschäft erfolgt,
   bb2) die übermittelten Daten entsprechend einem Datenaufnahmeverfahren in die in der Datenkonzentrationsvorrichtung verfügbaren Daten übernommen werden,
   bb3) die Versicherungsnummer von der Datenkonzentrationsvorrichtung über ein Telekommunikationsnetz an die Datenkommunikationsvorrichtung rückübermittelt wird,
   und wobei im Falle der fehlgeschlagenen Prüfung:
   bb4) die übermittelten geschäftsrelevanten Daten von der Datenkonzentrationsvorrichtung verworfen werden und auch keine Versicherungsnummer rückübermittelt wird,
   bb5) gegebenenfalls von der Datenkonzentrationsvorrichtung über das Telekommunikationsnetz eine Falsikatinformation an die Datenkommunikationsvorrichtung abgesetzt wird.

Eine Datenkommunikationsvorrichtung im Sinne der Erfindung ist jedes Datenterminal, das u.a. HTML (HyperTextMarkupLanguage)-fähig ist, vorzugsweise ein gängiger Personal Computer. Auf diese Datenkommunikationsvorrichtung werden z.B. Homepages von dem Server des Verkäufers geladen und dort die gewünschten Waren ausgesucht. Von diesem Datenterminal wird auch der Wunsch nach einer Absicherung des zu tätigenden e-Commerce-Geschäftes an die Datenkonzentrationsvorrichtung übermittelt.

Eine Datenkonzentrationsvorrichtung im Sinne der Erfindung ist jeder einzelne Datenbankcomputer oder aber ein Computernetzwerk mit einer Netzwerkdatenbank. Im Falle der Verwendung eines Computernetzwerkes mit einer Netzwerkdatenbank als Datenkonzentrationsvorrichtung ergibt sich hier die vorteilhafte Möglichkeit unterschiedliche Teile des Netzwerkes und damit auch unterschiedliche Datenbanken in die jeweilige Prüfung einzubeziehen. Dabei können dieses Bereiche durchaus auch flexibel überlappen.

Ein Telekommunikationsnetz im Sinne der Erfindung ist jedes Netz über das Sprache und Daten übertragen werden können.

Der Transfer der Daten zwischen der Datenkommunikationsvorrichtung und der Datenkonzentrationsvorrichtung erfolgt vorzugsweise per parametrisiertem Hyperlink.

In der Datenkonzentrationsvorrichtung werden die von der Datenkommunikationsvorrichtung übermittelten geschäftsrelevanten Daten anhand der dort vorhandenen Daten überprüft.

Diese geschäftsrelevanten Daten umfassen zumindest die Identifikationsnummer des Verkäufers. Anhand dieser Identifikationsnummer wird in dem Datenbestand auf der Datenkonzentrationsvorrichtung der Verkäufer ermittelt und von der Datenkonzentrationsvorrichtung automatisch festgestellt, ob die Bonität des Verkäufers in Ordnung ist. Diese Bonitätsprüfung umfaßt, ob der Verkäufer seine Versicherungsprämie an das Versicherungsunternehmen bezahlt hat.

Des weiteren wird vorzugsweise überprüft, ob in der Vergangenheit Insolvenz- oder Betrugsverfahren gegen den Verkäufer anhängig waren.
Vorzugsweise umfassen die geschäftsrelevanten Daten weiterhin den Betrag des jeweiligen e-Commerce-Geschäftes, die Identität des Käufers, die Zahlungsart und die Lieferfrist der bestellten Waren.

Mit diesen Daten und den in der Datenkonzentrationsvorrichtung vorhandenen Daten können weitere Prüfkriterien überprüft werden. So kann z.B. eine Versicherung des zu tätigenden e-Commerce-Geschäftes von der Datenkonzentrationsvorrichtung verweigert werden wenn:
a) das zu tätigende Geschäft einen bestimmten dem jeweiligen Verkäufer zugeordneten Wert übersteigt.
b) die Summe der insgesamt versicherten e-Commerce-Geschäfte mir dem jeweiligen Verkäufer einen bestimmten maximalen Betrag überschreitet, wobei die Versicherungen, die bereits abgelaufen sind und demnach aus dem Datenbestand der Datenkonzentrationsvorrichtung gelöscht wurden nicht berücksichtigt werden.
c) die Bonität des Käufers nicht in Ordnung ist; d.h. der Käufer durch negative Geschäftsgebaren aufgefallen ist, und/oder durch demoskopische Prüfung, Adressprüfung und/oder Plausibilitätsprüfung negative Geschäftsgebaren zu erwarten sind.
d) die in einer bestimmten Zeiteinheit versicherten e-Commerce-Geschäfte beim Käufer und/oder beim Verkäufer ungewöhnlich hoch sind, wobei saisonbedingte Anstiege wie z.B. vor Weihnachten berücksichtigt werden.

Ist diese Prüfung erfolgreich, vergibt die Datenkonzentrationsvorrichtung automatisch eine Versicherung über das zu tätigende Geschäft.

Vorzugsweise hat die Versicherung eine begrenzte Laufzeit, die sich z.B. an der üblichen Lieferzeit, der von dem Kunden bestellten Waren bemißt. Die Versicherung kann sich aber z.B. auch über die gesamte Garantiezeit der Waren erstrecken. Nach Ablauf der Versicherungszeit werden die Versicherungsnummer und die dazugehörigen Daten automatisch von der Datenkonzentrationsvorrichtung gelöscht.

Außerdem erhält der Käufer vorzugsweise, sofern er eine Email-Adresse besitzt ein Email, in dem die wichtigsten Daten der abgeschlossenen Versicherung wie z.B. Name und Adresse des Versicherers, Versicherungsnummer, Höhe der Versicherung und/oder Laufzeit der Versicherung zusammengefaßt sind. Falls die bestellte und bezahlte Ware nicht innerhalb der vom Verkäufer angegebenen Lieferfrist geliefert wird und/oder die Ware innerhalb der Garantiezeit Mängel aufweist, die der Verkäufer nicht beseitigt, kann der Kunde sich an die Versicherung wenden und bekommt sein Geld zurück.

Der Fachmann versteht, daß dasselbe System auch zur Absicherung der Risiken des Verkäufers gegenüber dem Käufer eingesetzt werden kann.

Die Versicherung kann z.B. von einem Versicherungsunternehmen ausgestellt werden, das in dem jeweiligen Land eine Zulassung zur Vergabe von Versicherungen hat. Die Vergabe der Versicherung erfolgt durch die Zuteilung einer Versicherungsnummer.

Das vorliegende System hat den Vorteil, daß Versicherungen von e-Commerce-Geschäften vollautomatisch innerhalb von wenigen Sekunden vorzugsweise < 5 Sekunden, besonders bevorzugt < 1 Sekunden abgeschlossen werden. Das erfindungsgemäße System ist einfach zu installieren. Der Käufer muß lediglich seinen Wunsch nach einer Versicherung äußern, der dann automatisch geprüft wird.

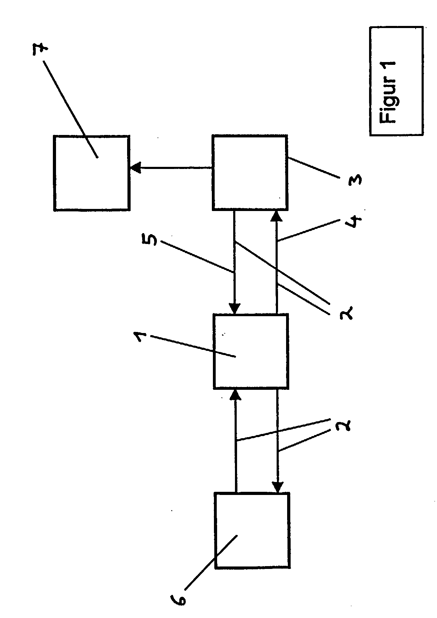

Im Folgenden wird das erfindungsgemäße Verfahren anhand der Figur 1 erläutert. Diese Erläuterungen sind lediglich beispielhaft und schränken den allgemeinen Erfindungsgedanken nicht ein.

Bei diesem Beispiel hat der Verkäufer mit einem Versicherungsunternehmen einen Vertrag abgeschlossen, der besagt, daß das Versicherungsunternehmen alle finanziellen Risiken des Käufers bei Nichterfüllung des e-Commerce-Geschäftes seitens des Verkäufers übernimmt, sofern auch der Käufer vor Abschluß des Kaufvertrages bei dem Versicherungsunternehmen eine für ihn vorzugsweise kostenfreie Versicherung abgeschlossen hat.

Der Käufer, bedient sich eines Personal Computers (PC) 1, um die Homepage des Verkäufers 2 nebst aller Daten von dessen Server 6 über das Telekommunikationsnetz 2 auf seinen PC 1 zu laden. Auf dieser Homepage sucht er sich dann diverse Waren aus und legt dieses in einen virtuellen Warenkorb, der sich auf der Homepage des Verkäufers befindet.

Nach der Auswahl der Waren gibt der Käufer über seinen PC 1 z.B. seine Kreditkartennummer ein und wird, bevor der Kauf der Waren über einen Button z.B. "Press This To Buy" abgeschlossen wird gefragt, ob er eine Versicherung über dieses e-Commerce-Geschäft anschließen möchte, die ihn von allen Risiken der Nichterfüllung und eventuell Schlechterfüllung seitens des Verkäufers entbindet. Falls er diese Frage mit "ja" beantwortet, wird das erfindungsgemäße Verfahren in Gang gesetzt.

Per parametrisiertem Hyperlink werden sein Wunsch nach einer Versicherung und die geschäftsrelevanten Daten 4 von seinem PC 1 über das Telekommunikationsnetz 2 zu dem Computer 3 übertragen. In diesem Fall sind die geschäftsrelevanten Daten die Identifikationsnummer des Verkäufers, der Name und die Adresse des Käufers, die Lieferzeit der ausgewählten Waren und der DM-Betrag des zu tätigenden e-Commerce-Geschäftes. Vorab wird vorzugsweise von dem Computer 3 per Checksumme und Timestamp überprüft, ob die übertragenen Daten nicht manipuliert sind und ob es bei der Übertragung nicht zu einer ungewollten Vervielfältigung der Daten gekommen ist.

An den Computer 3 sind mehrere Datenbanken angeschlossen. Der Computer 3 wird üblicherweise von dem Versicherungsunternehmen oder einem ihm angeschlossenen Unternehmen betrieben.

In dem Computer 3 wird unter Zuhilfenahme der Datenbanken zunächst einmal geprüft, ob der Verkäufer seine Versicherungsprämie bezahlt hat und ob über ihn Informationen in Zusammenhang mit Insolvenz- und/oder Betrugsverfahren vorliegen. Verlaufen diese Prüfungen negativ, können zusätzlich wahlweise eines oder mehrere der folgenden Prüfkriterien überprüft werden:
1. Übersteigt der DM-Betrag des zu tätigenden Geschäftes das dem Verkäufer von der Versicherung gesetzten Limits über die Versicherung von Einzelgeschäften.
2. Wird mit dem neu zu versichernden Geschäft das von der Versicherungsgesellschaft dem Verkäufer gesetzte Limit der insgesamt versicherten e-Commerce-Geschäfte überschritten.
3. Weist der zeitliche Verlauf der Summe aller derzeit versicherten e-Commerce-Geschäfte beim Käufer und/oder beim Verkäufer irgendwelche nicht mit saisonalen Schwankungen zu begründende Besonderheiten auf.
4. Sind über den Käufer Insolvenzprobleme oder Betrugsverfahren bekannt.

Die Anzahl der automatisch von dem Computer 3 geprüften Kriterien hängt u.a. von der Höhe des zu versichernden Geschäftes und von der Historie des Verkäufers und oder des Käufers ab.

Nach erfolgreicher Prüfung eines oder mehrerer Kriterien, legt der Computer 3 die Laufzeit der Versicherung fest, die sich z.B. auf 37 Tage beläuft. Danach übernimmt er die geschäftsrelevanten Daten mit einem Datenübernahmeverfahren in eine der angeschlossenen Datenbanken und rücküberträgt via den Telekommunikationsnetzen 2 eine Versicherungsnummer 5 und eine Meldung über den erfolgreichen Abschluß einer Versicherung, die den versicherten Betrag und die Laufzeit der Versicherung beinhaltet an den PC 1 per Webseite.

Falls der Käufer eine Email-Adresse hat, wird gleichzeitig ein Email, das die wesentlichen Konditionen der abgeschlossenen Versicherung aufweist, auf einem Email-Server 7 hinterlegt. Zwischen dem Email-Server 7 und dem PC1 besteht ebenfalls eine Telekommunikationsnetzverbindung (nicht dargestellt).

Nach Abschluß der Versicherung schließt der Käufer dann das e-Commerce-Geschäft ab, indem er z.B. den Button "Press This To Buy" drückt. Dieser Kaufwunsch wird dann auf den Server 6 des Verkäufers übertragen und dort bearbeitet.

Falls die Prüfung negativ verläuft, verwirft der Computer 3 alle ihm übermittelten Daten und rücküberträgt eine Meldung, daß das jeweilige e-Commerce-Geschäft nicht versichert werden kann.

Die erfindungsgemäße Vergabe von Versicherungen erfolgt je nach Komplexität der Prüfung in fünf Sekunden in der Regel jedoch nur maximal in einer Sekunde.

## Patentansprüche

1. Verfahren zur automatisierten Vergabe einer Versicherung zur Absicherung der Risiken bei e-Commerce-Geschäften mittels Datenkommunikationsvorrichtungen (1), Telekommunikationsnetzen (2) und Datenkonzentrationsvorrichtung (3), wobei das Verfahren eine beliebige Wiederholung der folgenden Verfahrensschritte aufweist:
a) Übermittlung des Wunsches nach einer Versicherung, geschäftsrelevanter Daten (4) und gegebenenfalls persönlicher Daten mittels einer Datenkommunikationsvorrichtung (1) über ein Telekommunikationsnetz (2) an eine Datenkonzentrationsvorrichtung (3),
b) Prüfung der in Schritt a) übermittelten geschäftsrelevanten Daten (4) in der Datenkonzentrationsvorrichtung (3) anhand der dort verfügbaren Daten und mindestens eines Prüfkriteriums, wobei im Falle der erfolgreichen Prüfung:
bb1) die Zuordnung einer Versicherung in Form einer Versicherungsnummer (5) zu dem jeweiligen Geschäft erfolgt,
bb2) die übermittelten Daten (4) entsprechend einem Datenaufnahmeverfahren in die in der Datenkonzentrationsvorrichtung (3) verfügbaren Daten übernommen werden,
bb3) die Versicherungsnummer (5) von der Datenkonzentrationsvorrichtung (3) über ein Telekommunikationsnetz (2) an die Datenkommunikationsvorrichtung (1) rückübermittelt wird,
und wobei im Falle der fehlgeschlagenen Prüfung:
bb4) die übermittelten geschäftsrelevanten Daten (4) von der Datenkonzentrationsvorrichtung verworfen werden und auch keine Versicherungsnummer (5) rückübermittelt wird,
bb5) gegebenenfalls von der Datenkonzentrationsvorrichtung (3) über das Telekommunikationsnetz (2) eine Falsikatinformation an die Datenkommunikationsvorrichtung (1) abgesetzt wird.

2. Verfahren nach Anspruch 1, dadurch gekennzeichnet, daß die Daten eines jeweiligen e-Commerce-Geschäftes und die dazugehörige Versicherungsnummer (5) nach einer bestimmten Zeit, vorzugsweise nach Ablauf der Versicherungsdauer, aus den in der Datenkonzentrationsvorrichtung (3) gespeicherten Daten automatisch gelöscht werden.

3. Verfahren nach Anspruch 1 oder 2, dadurch gekennzeichnet, daß bei einer erfolgreichen Prüfung von der Datenkonzentrationsvorrichtung (3) über ein Telekommunikationsnetz (2) an die Email-Adresse des Käufers zusätzlich, automatisch eine elektronische Nachricht abgesendet wird, in der der Abschluß einer Versicherung bestätigt wird.

4. Verfahren nach einem der Ansprüche 1 bis 3, dadurch gekennzeichnet, daß die geschäftsrelevanten Daten die Identifikationsnummer des Verkäufers, vorzugsweise zusätzlich der Betrag des jeweiligen Geschäftes, die Identität des Käufers, die Zahlungsart und/oder die Lieferfrist der bestellten Waren sind.

5. Verfahren nach einem der Ansprüche 1 bis 4, dadurch gekennzeichnet, daß die Daten zwischen der Datenkommunikationsvorrichtung (1) und der Datenkonzentrationsvorrichtungen (3) per parametrisiertem Hyperlink übermittelt werden.

6. Verfahren nach einem der Ansprüche 1 bis 5, dadurch gekennzeichnet, daß als Prüfkriterium die Bonität des Verkäufers überprüft wird.

7. Verfahren nach einem der Ansprüche 1 bis 6, dadurch gekennzeichnet, daß als Prüfkriterium untersucht wird, ob die Summe der insgesamt versicherten e-Commerce-Geschäfte des jeweiligen Verkäufers einen bestimmten Wert nicht überschreitet.

8. Verfahren nach einem der Ansprüche 1 bis 7, dadurch gekennzeichnet, daß als Prüfkriterium die Bonität des Käufers überprüft wird.

9. Verfahren nach einem der Ansprüche 1 bis 8, dadurch gekennzeichnet, daß als Prüfkriterium der zeitliche Verlauf der Summe der versicherten e-Commerce-Geschäfte beim Käufer und/oder beim Verkäufer untersucht werden.

10. Verfahren nach einem der Ansprüche 1 bis 9, dadurch gekennzeichnet, daß seine Durchführung jeweils < 5 Sekunden, vorzugsweise < 1 Sekunde dauert.
